(19) Europäisches Patentamt | European Patent Office | Office européen des brevets

(11) **EP 4 536 524 B1**

(12) **EUROPEAN PATENT SPECIFICATION**

(45) Date of publication and mention
of the grant of the patent:
**29.04.2026  Bulletin 2026/18**

(21) Application number: **22731686.6**

(22) Date of filing: **06.06.2022**

(51) International Patent Classification (IPC):
**B60W 10/184** (2012.01)     **B60W 10/04** (2006.01)
**B60W 40/114** (2012.01)     **B62D 6/00** (2006.01)
**B60T 8/1755** (2006.01)

(52) Cooperative Patent Classification (CPC):
**B60W 10/184; B60T 8/17551; B60W 10/04;
B60W 40/114; B62D 6/003;** B60W 2040/1346;
B60W 2520/14; B60W 2520/30; B60W 2720/14;
B60W 2720/30; B60W 2720/406

(86) International application number:
**PCT/EP2022/065288**

(87) International publication number:
**WO 2023/237174 (14.12.2023 Gazette 2023/50)**

(54) **A METHOD FOR CONTROLLING A YAW MOTION OF A VEHICLE**

VERFAHREN ZUR STEUERUNG EINER GIERBEWEGUNG EINES FAHRZEUGS

PROCÉDÉ DE COMMANDE D'UN MOUVEMENT DE LACET D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.04.2025  Bulletin 2025/16**

(73) Proprietor: **VOLVO TRUCK CORPORATION
405 08 Göteborg (SE)**

(72) Inventors:
• **SÖDERBERG, Daniel
413 23 Göteborg (SE)**
• **FAHLGREN, Emil
413 07 Göteborg (SE)**

(74) Representative: **Valea AB
Box 1098
405 23 Göteborg (SE)**

(56) References cited:
**EP-A1- 2 918 479      EP-A1- 3 444 157
JP-A- 2015 074 421    US-A1- 2012 226 417**

**Description**

TECHNICAL FIELD

The invention relates to a method for controlling a yaw motion of a vehicle. The invention further relates to a control unit, a vehicle, a computer program and a computer program medium. The invention can be applied in heavy-duty vehicles, such as trucks, buses and construction equipment. The invention can also be applied in any other suitable vehicle such as a car.

BACKGROUND

In the field of vehicle, in particularly low-, medium- and heavy-duty vehicles commonly referred to as trucks, there is a continuous development with regards to various control functionalities of the vehicle. In particular, the control functionalities intend to improve the drivability of the vehicle, the comfort for the driver, and the safety during operation.

One control functionality that is generally always under improvement is the steering of the vehicle. There is a continuous development in this particular technical field with regards to autonomous steering systems, steer-by-wire systems, etc. In particular, these types of steering systems continuously struggle with the problem of controlling the vehicle to follow the road curvature as desired. An autonomous steering system may for example base its steering on detected curvatures ahead of the vehicle. The steer-by-wire system bases its steering on input from either a human operator or an autonomous function.

One problem is that for some steering operation system the vehicle power consumption is relatively high. Another problem is that malfunctioning steering system increases the risk of traffic accidents due to e.g. vehicle crashes as the steering system is not functioning as intended. To improve power consumption and reduce the risk of accidents a method to improve steering is discussed in WO2022/042818 A1, wherein steering of a vehicle is performed by having a pair of independently steerable wheels and the vehicle's yaw motion is controlled by propelling the pair of steerable wheels independently, also referred to as steer by propulsion. Furthermore, to control a steering force by controlling braking and driving forces of steered wheels is discussed in EP3444157 A1.

However, limitations of yaw motion can arise on surfaces with low coefficient of friction such as ice and snow or due to limitations in obtainable wheel angles. In these cases the yaw moment may be limited. A requested steering moment therefore need to be limited, thus also limiting the yaw motion that can be generated.

Hence, there is a desire to further improve vehicle steering operation to more efficiently control a vehicle's yaw motion.

SUMMARY

An object of the invention is to improve vehicle steering operation of a vehicle. According to a first aspect, the above object is achieved by a method according to claim 1. Hence, there is provided a method for controlling a yaw motion of a vehicle. The vehicle comprises a first set of steerable wheels and a second set of wheels. The vehicle comprises a first set of motion support devices for controlling a movement of said first set of steerable wheels, and at least one second motion support device for controlling a movement of said second set of wheels. Each motion support device in said first set of motion support devices is drivingly connected, directly or indirectly, to a respective individual wheel of the first set of steerable wheels, such that each motion support device out of the first set of motion support devices can produce a load via the respective individual wheel by propelling and/or braking the respective individual wheel. The method comprises obtaining an indication of a desired yaw motion to be applied by the vehicle, determining whether or not the desired yaw motion is obtainable by the first set of steerable wheels by selecting a steering configuration for the said first set of steerable wheels, thereby producing a first yaw motion portion, and by operating said first set of motion support devices associated with said first set of steerable wheels so as to impart a first yaw moment on the vehicle, and thereby producing a second yaw motion portion, without exceeding one or more predetermined limits for the steering configuration and/or the first set of motion support devices associated with said first set of steerable wheels; and wherein the second yaw motion portion is based on a torque applied to each respective wheel of the first set of steerable wheels , and/or based on a wheel suspension scrub radius of each respective wheel of the first set of steerable wheels ; in response to determining that the desired yaw motion cannot be obtained by the first set of steerable wheels without exceeding the one or more predetermined limits for the steering configuration and/or the first set of motion support devices associated with said first set of steerable wheels, operating the at least one second motion support device associated with said second set of wheels so as to impart a second yaw moment on the vehicle, wherein the second yaw moment is at least partly a resulting yaw moment produced by operating the at least one second motion support device to propel the vehicle, to achieve a yaw moment based on respective individual steering angles for the first set of steerable wheels.

In this way, when the desired yaw motion cannot be obtained by the first set of steerable wheels without exceeding the one or more predetermined limits, the at least one second motions support device can be operated as to impart the second yaw moment on the vehicle. In other words, when the combined resulting yaw motion of steering and operating the first set of steerable wheels are not able to achieve the desired yaw motion, it is possible to operate the second set of wheels to further increase the yaw motion when needed. In this way it is possible to use the second set of wheels for temporarily increasing the yaw motion capabilities when turning the vehicle. As used here, the term "operating the at least one second motion support device associated with said second set of wheels so as to impart a second yaw moment on the vehicle" is intended to encompass a condition in which that the a least one second motion support device may be operated together with e.g. the said first set of steerable wheels so as to impart a second yaw moment on the vehicle as well as a condition in which that the a least one second motion support device alone may be operated together so as to impart a second yaw moment on the vehicle.

Optionally, operating said first set of motion support devices, associated with said first set of steerable wheels so as to impart the first yaw moment on the vehicle, comprises each motion support device out of the first set of motion support devices producing individual loads for its respective individual wheel out of the first set of steerable wheels. In other words, the first set of steerable wheels may have different forces on each respective individual wheel for producing the first yaw moment, and thus improving yaw motion control.

Optionally, producing individual loads for respective individual wheels out of the first set of steerable wheels comprises applying respective loads in different directions for two different respective wheels in the first set of steerable wheels. When applying loads in different directions for the two different respective wheels, increased yaw moment and thus an increased yaw motion may thus be achieved.

Optionally, producing individual loads of respective individual wheels out of the first set of steerable wheels comprises braking and/or propelling at least one wheel in the first set of steerable wheels.

Optionally, the one or more predetermined limits for the first set of motion support devices comprises, for each motion support device in the first set of motion support devices, a maximum individual load based on a frictional force for its respective individual wheel out of the first set of steerable wheels.

Optionally, the one or more predetermined limits for the first set of motion support devices comprises, a power and/or energy limit for each motion support device in the first set of motion support devices.

Optionally, the one or more predetermined limits for the steering configuration comprises, a maximum steering angle which can be applied by each respective individual wheel out of the first set of steerable wheels.

Optionally, the one or more predetermined limits for the first set of motion support devices comprises a maximum torque for each individual wheel out of the first set of steerable wheels.

Optionally, determining whether or not the desired yaw motion is obtainable by the first set of steerable wheels comprises assessing whether or not it is possible to identify a combination of the first yaw motion portion and the second yaw motion portion which combination results in the desired yaw motion.

Optionally, assessing whether or not it is possible to identify a combination of the first yaw motion portion and the second yaw motion portion which combination results in the desired yaw motion comprises selecting respective steering angles for the first set of steerable wheels.

Optionally, assessing whether or not it is possible to identify a combination of the first yaw motion portion and the second yaw motion portion which combination results in the desired yaw motion comprises selecting respective loads to be produced by each respective wheel in the first set of steerable wheels.

Optionally, obtaining the indication of the desired yaw motion of the vehicle, comprises obtaining a steering angle of the vehicle. The steering angle may be a steering wheel angle.

Optionally, the method further comprises comparing the steering angle with a model of a reference vehicle, and determining the desired yaw motion to be a yaw motion applied by the reference vehicle in the model when the reference vehicle in the model is steered with the obtained steering angle.

Optionally, obtaining the indication of a desired yaw motion of the vehicle, comprises obtaining the desired yaw motion to be applied by the vehicle.

Optionally, first yaw motion portion is based on a wheel suspension scrub radius of each respective wheel of the first set of steerable wheels.

The scrub radius of each respective wheel of the first set of steerable wheels is a distance between a position of where a king pin axis of the respective wheel intersects a road surface and a center part of the respective wheel.

Optionally, the second yaw motion portion is based on a torque applied to each respective wheel of the first set of steerable wheels.

Optionally, the at least one second motion support device comprises for each of the second set of wheels a respective second motion support device for individual control of the movement of each respective wheel in the second set of wheels.

Optionally, the at least one second motion support device controlling a movement of said second set of wheels by jointly controlling the movement of the second set of wheels. Optionally, the second set of wheels consists of non-steerable wheels.

Optionally, the second yaw moment is at least partly a resulting yaw moment produced by operating the at least one second motion support device with respective individual steering angles for the first set of steerable wheels.

According to a second aspect, there is provided a control unit to perform the method according to the first aspect. The control unit may be an electronic control unit.

According to a third aspect, there is provided a vehicle comprising the control unit according to the second aspect.

The vehicle comprises a first set of steerable wheels and a second set of wheels, the vehicle comprising a first set of motion support devices for controlling a movement of said first set of steerable wheels, and at least one second motion support device for controlling a movement of said second set of wheels, whereby each motion support device in said first set of motion support devices is drivingly connected, directly or indirectly, to a respective individual wheel of the first set of steerable wheels, such that each motion support device out of the first set of motion support devices can produce a load via a respective wheel of the first set of steerable wheels.

Optionally, each respective wheel of the first set of steerable wheels is mounted to a respective kingpin bolt such that an axis along an angle of the respective kingpin bolt is a scrub radius from intersecting a center line of a respective wheel, and wherein a yaw motion produced when turning at least one wheel out of the first set of steerable wheels is based on the scrub radius.

Optionally, the first set of motion support devices comprises a respective electric motor for each respective wheel of the first set of steerable wheels.

Optionally, the first set of motion support devices further comprises a respective brake for each respective wheel of the first set of steerable wheels.

Optionally, the vehicle is an autonomous vehicle.

According to a fourth aspect, there is provided a computer program comprising program code means for performing the method according to the first aspect, when said program is run on a computer.

According to a fifth aspect, there is provided a computer program medium carrying a computer program comprising program code means for performing the method according to the first aspect, when said program is run on a computer.

Further advantages and advantageous features of the invention are disclosed in the following description and in the dependent claims.

BRIEF DESCRIPTION OF THE DRAWINGS

With reference to the appended drawings, below follows a more detailed description of embodiments of the invention cited as examples.

In the drawings:

Fig. 1 is a schematic overview of a vehicle in accordance with embodiments herein.

Fig. 2 is a schematic block diagram illustrating a comparison of prior art and embodiments herein.

Fig. 3 is a flowchart of a method according to embodiments herein.

Fig. 4 is a schematic block diagram illustrating an example scenario of a vehicle.

Fig. 5 is a schematic block diagram illustrating an example scenario of a wheel in a vehicle.

Fig. 6 is a schematic block diagram illustrating an example scrub radius of a kingpin bolt and a wheel.

Fig. 7 is a schematic block diagram and combined flow chart illustrating an example scenario of embodiments herein.

Fig. 8 is a schematic block diagram and combined flow chart illustrating an example scenario of embodiments herein.

Figs. 9a-9b are schematic block diagrams illustrating a control unit.

DETAILED DESCRIPTION OF EXAMPLE EMBODIMENTS OF THE INVENTION

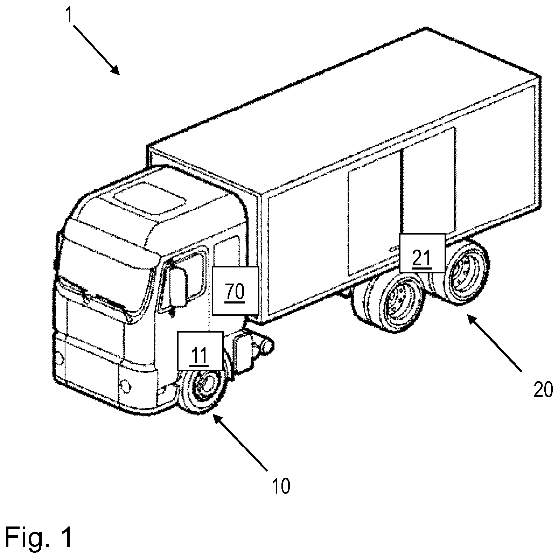

**Fig. 1** illustrates a schematic overview of **a vehicle 1.** Although illustrated as a truck in Fig. 1, embodiments herein are applicable to any suitable vehicle e.g., any of a car, a truck, a bus, etc.

The vehicle 1 comprises **a first set of steerable wheels 10.** Although depicted in Fig. 1 on a front of the vehicle 1, the first set of steerable wheels 10 may be located on any suitable part of the vehicle 1. The vehicle 1 further comprises a **first set of motion support devices 11** for controlling a movement of said first set of steerable wheels 10.

Each motion support device in said first set of motion support devices 11 is drivingly connected, directly or indirectly, to a respective individual wheel of the first set of steerable wheels 10, such that each motion support device out of the first set of motion support devices 11 can produce a load via a respective wheel of the first set of steerable wheels 10. The respective individual wheels may also be steered individually. In other words, it may be possible to steer, brake and/or propel the first set of steerable wheels with different configurations, forces and/or directions. To produce individual loads on the respective individual wheels, the first set of motion support devices 11 may comprise an electric motor and any suitable brake, e.g. electric brakes, service brakes, and/or pneumatic brakes.

Each respective wheel of the first set of steerable wheels 10 may be mounted to a respective kingpin bolt. The kingpin bolt may be attached to an axle associated with the first set of steerable wheels 10. The first set of steerable wheels 10 may be mounted to a respective kingpin bolt such that an axis extending along an angle of the respective kingpin bolt is a scrub radius from intersecting a center line of a respective wheel. In this way, a yaw motion produced when turning at least one wheel out of the first set of steerable wheels 10 may be based on the scrub radius, i.e. increase yaw motion on higher scrub radius. This is since when e.g. applying a brake torque, the respective wheel will rotate around the axis extending along the angle of the respective kingpin bolt and thus cause an extra yaw moment on the vehicle 1 based on the scrub radius.

The vehicle 1 comprises a **second set of wheels 20.** Although depicted in Fig. 1 on a rear of the vehicle 1, the second set of wheels 20 may be located on any suitable part of the vehicle 1. The vehicle 1 comprises at least one second motion support device 21 for controlling a movement of said second set of wheels 20. The second set of wheels 20 may be independently or jointly steered. In some embodiments the second set of wheels 20 consists of non-steerable wheels.

In some embodiments, the at least one second motion support device 21 comprises, for each of the second set of wheels 20, a respective second motion support device for individual control of the movement of each respective wheel in the second set of wheels 20. In these embodiments, the second set of wheels 20 may be controlled independently similar to the first set of steerable wheels 10. In some of these embodiments, the second set of wheels 20 may for each wheel have individual loads controlled by the respective second motion support devices. In some embodiments, the at least one second motion support device 21 jointly controls the movement of the second set of wheels 20. In these embodiments, the second set of wheels 20 may have the same corresponding loads and/or a corresponding steering.

The at least one second motion support device 21 may comprise one or more electric motor and any suitable brake for braking the second set of wheels either jointly or independently, e.g. electric brakes, service brakes, and/or pneumatic brakes.

In some embodiments, each respective wheel of the second set of steerable wheels 20 may be mounted to a respective kingpin bolt. The kingpin bolt may be attached to an axle associated with the second set of wheels 20, e.g. a back axle. The second set of wheels 20 may be mounted to a respective kingpin bolt such that an axis along an angle of the respective kingpin bolt is a scrub radius from intersecting a center line of a respective wheel. In this way, a yaw motion produced when turning at least one wheel out of the second set of wheels 20 may be based on the scrub radius.

In some embodiments herein, the vehicle 1 is autonomous. In some embodiments, a steering angle to the first set of steerable wheels 10 is automatically determined. In some embodiments herein, the vehicle 1 and the first set of steerable wheels 10 is steered manually. In some embodiments herein the vehicle 1 is steered using and/or assisted by any suitable mechanism, e.g., steer by wire.

Embodiments herein may be performed by a **control unit 70.** The control unit 70 may be comprised in the vehicle 1 but may also be comprised in any other suitable location communicatively connected with the vehicle 1.

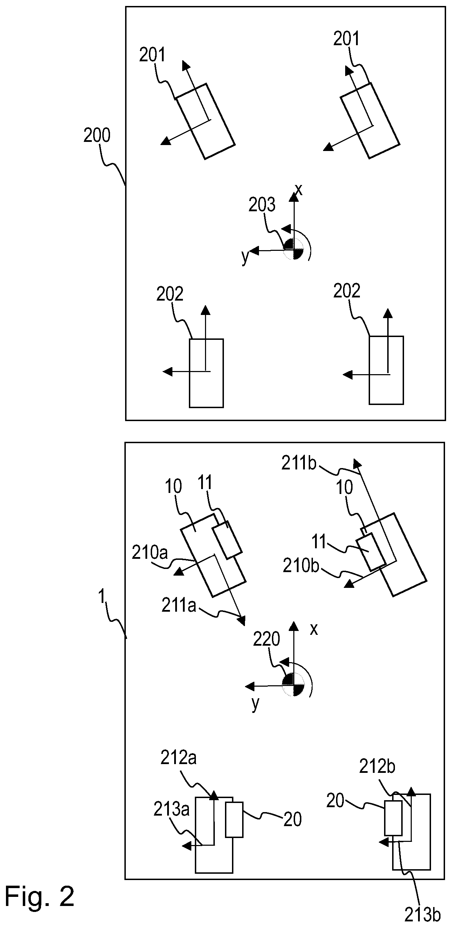

**Fig. 2** illustrates a comparison with a regular steering with steering as performed in accordance with embodiments herein. Regular steering is performed by a vehicle 200, wherein a **first set of front wheels 201** may jointly be steered and operated to produce a corresponding load on each front wheel. Similarly a **second set of rear wheels 202** may jointly be operated to produce a corresponding load on each rear wheel. In total, a yaw moment is created around a **center point 203** of the vehicle 200. A center point as used herein may mean a center of mass around which a yaw moment is generated for turning a vehicle. As regular steering is limited in how to control each wheel; the obtainable yaw motion may be limited.

In the example scenario of Fig. 2, the vehicle 1 may be a four-wheel drive battery electric truck. Using four in-wheel motors allows for more flexibility in manoeuvring the vehicle 1, e.g. as electric motors in the first set of motion support devices 11 and the at least one second motion support device 21 may be rapidly used to change loads on the respective wheels. In the example scenario of Fig. 2, **individual first loads 210a, 210b, 211a, 211b** is produced on the first set of steerable wheels 10, wherein the load 211a is in an opposite direction of the load 211b, thus achieving a significant yaw moment compared to if the loads 211a 211b were in the same direction. Furthermore, corresponding loads 212a, 212b, 213a, 213b is produced on the second set of wheels 20. In this way, a resulting yaw motion is achieved around the center point 220, which resulting yaw motion is increased compared to the yaw motion around the center point 203 of the vehicle 200 .

While the resulting yaw motion is increased compared to the yaw motion around the center point 203 of the vehicle 200, an achievable yaw moment is limited to an achievable moment produced on the first set of steerable wheels 10. To know whether the vehicle 1 is able to obtain a desired yaw motion, a limitation of the yaw moment produced on the first set of steerable wheels 10 may need to be determined. The limitation of the yaw moment may be determined by a function of a steering angle of the first set of steerable wheels and respective individual loads 210a, 210b, 211a, 211b, and based on a scrub radius of each respective wheel. When the desired yaw motion cannot be obtained, an increase in yaw motion is needed, and thus embodiments herein may relate to increasing and/or adjusting the loads 212a, 212b, and/or steering angle of the second set of wheels 20, which thereby result in a yaw acceleration. In other words, one wheel in the second set of wheels 20 may be propelled more than another wheel in the second set of wheels 20. In some scenarios, at least one wheel in the second set of wheels 20 may be braked to produce a yaw moment.

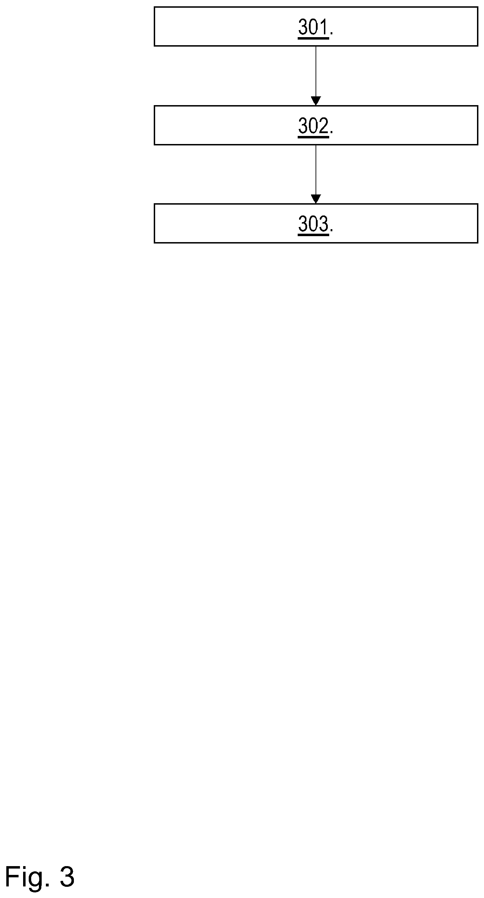

**Fig. 3** illustrates a method for controlling a yaw motion of the vehicle 1. The vehicle 1 comprises the first set of steerable wheels 10 and the second set of wheels 20. The vehicle 1 comprises a first set of motion support devices 11 for controlling a movement of said first set of steerable wheels 10, and at least one second motion support device 21 for controlling a movement of said second set of wheels 20. Each motion support device in said first set of motion support devices 11 is drivingly connected, directly or indirectly, to a respective individual wheel of the first set of steerable wheels 10, such that each motion support device out of the first set of motion support devices 11 can produce a load via the respective individual wheel. The method may e.g. be performed by the control unit 70. The method may comprise one or more of the following actions which actions may be taken in any suitable order.

## Action 301

The method comprises obtaining an indication of a desired yaw motion to be applied by the vehicle 1.

In some embodiments, obtaining the indication of the desired yaw motion of the vehicle 1, comprises obtaining a steering angle of the vehicle 1. The steering angle may be obtained as produced by a manual driver. The steering angle may be a steering wheel angle.

In some embodiments, obtaining the indication of the desired yaw motion of the vehicle 1, comprises obtaining a steering angle of the vehicle 1, comparing the steering angle with a model of a reference vehicle, and determining the desired yaw motion to be a yaw motion applied by the reference vehicle in the model when the reference vehicle in the model is steered with the obtained steering angle.

The model of the reference vehicle may for example be trained by use of sensor data of the reference vehicle, to produce the model of the reference vehicle using a machine learning method.

In other words, the yaw motion is a yaw motion that would be generated in the reference vehicle if turning the reference vehicle with the steering angle. In this way it is possible to produce a yaw motion in the vehicle 1, which imitates a yaw motion of the reference vehicle. This improves stability of the yaw motion as it will behave and will be predictable as when turning the reference vehicle while still allowing use of fast responsive electric machines, i.e. electric motors in each of the first set of motion support devices 11 and/or the at least one second motion support device 21, which may handle high frequency motion requests.

In some embodiments, obtaining the indication of a desired yaw motion of the vehicle 1, comprises obtaining the desired yaw motion to be applied by the vehicle 1. For example, when the vehicle 1 is an autonomous vehicle, the vehicle 1 may have calculated which yaw motion is necessary to take a turn in a most efficient manner.

## Action 302

The method comprises determining whether or not the desired yaw motion is obtainable by the first set of steerable wheels 10. Determining whether or not the desired yaw motion is obtainable by the first set of steerable wheels 10 is performed by selecting a steering configuration for the said first set of steerable wheels, thereby producing a first yaw motion portion, and by operating said first set of motion support devices 11 associated with said first set of steerable wheels 10 so as to impart a first yaw moment on the vehicle 1, and thereby producing a second yaw motion portion, without exceeding one or more predetermined limits for the steering configuration and/or the first set of motion support devices 11 associated with said first set of steerable wheels 10.

In other words, determining whether or not the desired yaw motion is obtainable by the first set of steerable wheels 10 is performed by use of respective steered angles of the first set of steerable wheels and their respective individual loads. The interaction of the respective angles and their respective individual loads may be used to determine the first yaw moment, i.e. the first and second yaw motion portion may be dependent and based on a scrub radius of each respective wheel in the first set of steerable wheels.

In some embodiments, operating said first set of motion support devices 11, associated with said first set of steerable wheels 10 so as to impart the first yaw moment on the vehicle 1, comprises each motion support device out of the first set of motion support devices 11 producing individual loads for its respective individual wheel out of the first set of steerable wheels 10.

In some embodiments, producing individual loads for respective individual wheels out of the first set of steerable wheels 10 comprises applying respective loads in different directions for two different respective wheels in the first set of steerable wheels 11.

In this way, first set of motion support devices 11 may accurately produce the necessary loads in directions to best achieve the intended and/or maximum yaw moment on the vehicle 1.

In some embodiments, producing individual loads of respective individual wheels out of the first set of steerable wheels 10 comprises braking and/or propelling at least one wheel in the first set of steerable wheels 11.

In some embodiments, the one or more predetermined limits for the first set of motion support devices 11 comprises, for each motion support device in the first set of motion support devices 11, a maximum individual load based on a frictional force for its respective individual wheel out of the first set of steerable wheels 10. In other words the yaw motion may be limited based on the possible loads given the available friction.

In some embodiments, the one or more predetermined limits for the first set of motion support devices 11 comprises, a power and/or energy limit for each motion support device in the first set of motion support devices 11. In other words the yaw motion may be limited based on power and/or energy limitation, for example how much power an electric engine may use.

In some embodiments, the one or more predetermined limits for the steering configuration comprises, a maximum steering angle which may be applied by each respective individual wheel out of the first set of steerable wheels 10. In other words the yaw motion may be limited based on a maximum steering angle for each respective individual wheel.

For some embodiments it may not be possible to achieve some steering angles due to limitations, e.g. the one or more predetermined limits. Some steering angle requests may for example be too large, e.g. above a threshold, and/or too sudden, e.g. below a threshold of time, which may cause a large jerk on a front axle and/or the first set of steerable wheels 10. This may be due to braking hard on one wheel of the first set of steerable wheels 10 and while propelling another which may send the vehicle 1 into a spin. In some embodiments, the one or more predetermined limits may comprise a limit to stay below a lateral acceleration threshold, e.g. below 3.5 m/s^2 in lateral acceleration.

In some embodiments, the one or more predetermined limits for the first set of motion support devices 11 comprises a maximum torque for each individual wheel out of the first set of steerable wheels 10. In other words the yaw motion may be limited based on a maximum torque available for each respective individual wheel.

In some embodiments, determining whether or not the desired yaw motion is obtainable by the first set of steerable wheels 10 comprises determining whether a combination of the first yaw motion portion and the second yaw motion portion results in a maximized yaw motion for the vehicle 1 and/or a yaw motion for the vehicle 1 within a threshold of the desired yaw motion. In other words, the combined effect of the first yaw motion portion and the second yaw motion portion need to be determined to accurately determine and the resulting yaw moment.

In some embodiments, determining whether or not the desired yaw motion is obtainable by the first set of steerable wheels 10 comprises assessing whether or not it is possible to identify a combination of the first yaw motion portion and the second yaw motion portion which combination results in the desired yaw motion. The assessment may relate to an optimization problem The assessment may comprise establishing an optimal yaw motion according to a condition, .e.g., establishing a maximum yaw motion and/or a yaw motion within the threshold of the desired yaw motion.

In some embodiments, assessing whether or not it is possible to identify a combination of the first yaw motion portion and the second yaw motion portion which combination results in the desired yaw motion comprises selecting respective steering angles for the first set of steerable wheels 10. In other words, the respective steering angles are statically set such that only the respective loads for the first set of steerable wheels 10 need to be determined for the assessment.

In some embodiments, assessing whether or not it is possible to identify a combination of the first yaw motion portion and the second yaw motion portion which combination results in the desired yaw motion comprises selecting respective loads to be produced by each respective wheel in the first set of steerable wheels 10. In other words, the respective loads for the first set of steerable wheels 10 are statically set such that only the respective steering angles need to be determined for the assessment.

In some embodiments, first yaw motion portion is based on a wheel suspension scrub radius of each respective wheel of the first set of steerable wheels 10. In some of these embodiments, the scrub radius of each respective wheel of the first set of steerable wheels 10 is a distance between a position of where a king pin axis of the respective wheel intersects a road surface and a center part of the respective wheel.

The second yaw motion portion may be based on a torque applied to each respective wheel of the first set of steerable wheels 10, e.g. a differential torque. The first yaw motion portion may be based on a steering of the first set of steerable wheels 10, e.g. with respect to a respective scrub radius. In some embodiments, at least one scrub radius needs to be positive.

**Action 303**

The method further comprises, in response to determining that the desired yaw motion cannot be obtained by the first set of steerable wheels 10 without exceeding the one or more predetermined limits for the steering configuration and/or the first set of motion support devices 11 associated with said first set of steerable wheels 10, operating the at least one second motion support device 21 associated with said second set of wheels 21 so as to impart a second yaw moment on the vehicle 1.

In other words, when the desired yaw motion is determined to not be obtainable, it is possible to use the load from the second set of wheels to be able to increase the yaw moment of the vehicle 1. This means that the In other words, the second yaw moment may be seen as an additional yaw moment to be used for the vehicle 1 when the first yaw moment is not sufficient.

In some embodiments, the at least one second motion support device 21 comprises for each of the second set of wheels 20 a respective second motion support device for individual control of the movement of each respective wheel in the second set of wheels 20. In this way, operating the at least one second motion support device 21 associated with said second set of wheels 21 so as to impart a second yaw moment on the vehicle 1 may comprise different loads and/or directions on the second set of wheels 20 such as the second yaw moment is maximized and/or that the second yaw moment in combination with the first yaw moment discussed in Action 202 is within a threshold of the desired yaw motion.

In some embodiments, the second yaw moment is at least partly a resulting yaw moment produced by operating the at least one second motion support device 21 with respective individual steering angles for the first set of steerable wheels 10. In other words, the resulting yaw moment is that the at least one second motion support device 21 may propel or otherwise cause the vehicle 1 to achieve a yaw moment based on the respective individual steering angles for the first set of steerable wheels 10.

In some embodiments, the at least one second motion support device 21 controlling a movement of said second set of wheels 20 by jointly controlling the movement of the second set of wheels 20. In other words, the second set of wheels 20 may still produce an increased yaw motion compared to only the first yaw motion.

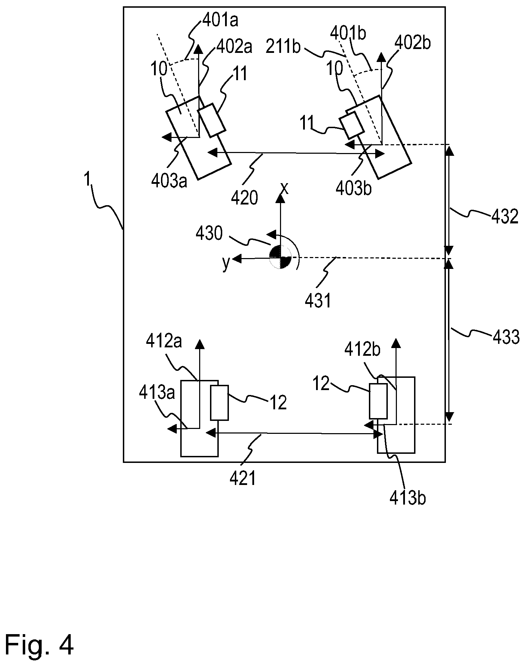

**Fig. 4** illustrates an example scenario of the vehicle 1. At least part of the vehicle configuration that is to be used for controlling a yaw motion of the vehicle 1 is depicted in Fig 4.

Wheel and/or tire forces acting on the vehicle 1 is illustrated first in Fig. 4. in a vehicle frame. Geometric parameters are shown in Fig 4. Each wheel in Fig. 4, e.g. out of the first set of steerable wheel 10 and/or the second set of wheels 20, may be equipped with a motor with gear and a brake, e.g. as part of the first set of motion support devices 11 and/or the at least one second motion support device 21.

The first set of steerable wheels 10 may be steered in a **first angle 401a** $\delta_1$ and a **second angle 401b** $\delta_2$, The first set of steerable wheels 10 may be subject to a plurality of loads in different directions arranged in respective angles, the plurality of loads comprising: a **load 402a, $F_{x,1}$,** a **load 402b, $F_{x,2}$,** a **load 403a, $F_{y,1}$,** and a **load 403b, $F_{y,2}$.**

The second set of wheels 20 may be subject to a plurality of loads in different directions arranged in respective angles, the plurality of loads comprising: a **load 412a, $F_{x,3}$,** a **load 412b, $F_{x,4}$,** a **load 413a, $F_{y,3}$,** and a **load 413b, $F_{y,4}$.**

The first set of steerable wheels 10 may have a **track width 420 $T_f$,** e.g. width of a front axle of the vehicle 1. The second set of wheels 10 may have a **track width 421 $T_r$,** e.g. width of a rear axle of the vehicle 1. The vehicle 1 may have a **center point 430,** e.g. center mass, in which a yaw motion may be produced to turn around. **Distances 422, 423 $L_f$, $L_r$,** may be respective distances from a front and/or rear axle to the center of point 430.

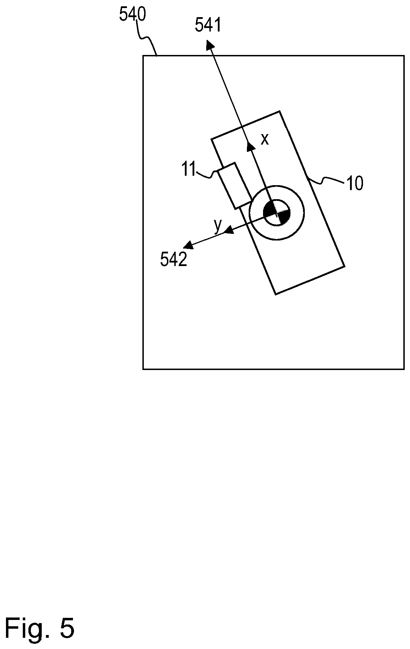

**Fig. 5** illustrates the same example scenario as in Fig. 4. for any of the wheels in the set of steerable wheels 10 as controlled by one of motion support devices in the first set of motion support devices 11. The respective wheel is illustrated in a **wheel frame 540.** The illustrated respective wheel is subject to a **load 541 $F_{wx,i}$,** e.g., corresponding to any of load 402a, $F_{x,1}$ and load 402b, $F_{x,2}$. The illustrated respective wheel is also subject to a **load 542 $F_{wx,i}$,** e.g., corresponding to any of load 403a, $F_{y,1}$, and load 403b, $F_{y,2}$.

The torque that may be applied on each wheel, e.g. as in Fig. 4 and Fig 5, may be according to:

$$T_{w,i} = T_{b,i} + G_i\, T_{EM,i}$$

The dynamic wheel equation may be defined by:

$$\dot{\omega}_i = T_{w,i} - F_{wx,i} R$$

The conversion between the wheel frame and vehicle frame may be defined by:

$$F_i = \begin{bmatrix} F_{x,i} \\ F_{y,i} \\ 0 \end{bmatrix} = \begin{bmatrix} cos\,(\delta_i) & -sin(\delta_i) & 0 \\ sin\,(\delta_i) & cos\,(\delta_i) & 0 \\ 0 & 0 & 1 \end{bmatrix} \begin{bmatrix} F_{wx,i} \\ F_{wy,i} \\ 0 \end{bmatrix}$$

Small angle approximation such that $sin(\delta_i)=0$ and $cos(\delta_i)=1$ is made in the example scenario. The steady state equation for the wheel may be used by embodiments herein such that the longitudinal wheel force may be defined by:

$$F_{x,i} = \frac{T_{w,i}}{R}$$

Steering moment

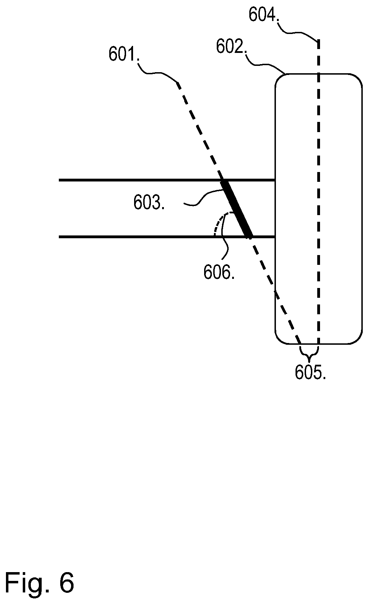

Embodiments herein may comprise a wheel suspension design on a steered axle, e.g., a front axle of the vehicle 1. Steering moment may be produced through a moment arm which is the scrub radius of the tire. The scrub radius depends on the wheel suspension and is illustrated in **Fig. 6.**

Fig. 6 illustrates an example **steerable wheel 602.** The steerable wheel 602 may be a wheel in the first set of steerable wheels 10. The steerable wheel 602 may have a tire wherein a **center line 604** extends along the middle of the steerable wheel 602 and/or a tire on the steerable wheel 602. The steerable wheel 602 may have its center point of contact to a surface, e.g. road along the center line 604, also referred to as a center part of the steerable wheel 602.

The steerable wheel 602 may be mounted to a **kingpin bolt 603** such that an **axis 601** extending along an **angle 606** of the kingpin bolt 603 is a scrub radius from intersecting the center line 604.

In this way, a yaw motion produced when turning the steerable wheel 602 and a yaw motion is created based on the scrub radius, i.e. an increased yaw motion for higher scrub radius. This is since when e.g. applying a brake torque to the steerable wheel 602, the steerable wheel 602 will rotate around the axis 601 and thus cause an extra yaw moment on the vehicle 1, based on the scrub radius. In other words, an increase in scrub radius means a larger steering moment for the same torque applied on the steerable wheel 602. In this way, the steerable wheel 602 will turn more and thus produce an increased yaw moment. The scrub radius may therefore limit and/or indicate how much the steerable wheel 602 may be steered and/or what yaw motion may be produced by the steerable wheel 602.

Steering moment from differential longitudinal forces on the front axle may be defined by:

$$M_{steer} = r_s \Delta F_x$$

Using the equation for steady state tire forces and with reference to Figs. 4-5, it is possible to define the steering moment as:

$$M_{steer} = \frac{r_s}{R}(T_{w,2} - T_{w,1})$$

To control a steering angle of the vehicle 1, a Proportional Integral (PI) controller is used.

A straightforward implementation makes a PI controller suitable, and the discrete formulation at time step k may be defined by:

$$M_{steer,k} = K_p \Delta \delta_{f,k} + K_i T_s \sum \Delta \delta_{f,k}$$

Yaw moment and steering moment coupling:

The yaw moment of the vehicle 1 may be described by:

$$M_z = \sum r_i \times F_{x,i}$$

The distance from the center of mass to where the wheel forces are applied may be expressed according to:

$$r_i = \begin{bmatrix} \dfrac{T_i}{2} \\ L_i \\ 0 \end{bmatrix}$$

With the steady state and small angle approximations, the yaw moment of the vehicle 1 may be defined by:

$$M_z = -\frac{T_f}{2R}T_{w,1} + \frac{T_f}{2R}T_{w,2} - \frac{T_r}{2R}T_{w,3} + \frac{T_r}{2R}T_{w,4} + 2C_{\alpha f}L_f\delta_f$$

The yaw moment may therefore be divided into three different parts: direct yaw moment from the front axle, e.g. the second yaw moment portion of actions 301-302 above, direct yaw moment from the rear axle, e.g. the second yaw moment of actions 301-302 above, and yaw moment due to the steering angle, e.g. the first yaw moment portion of actions 301-302 above,:

$$M_z = M_{zf} + M_{zr} + M_{z\delta}$$

Yaw moment from a differential torque, $\Delta T_{w,fa,}$ front axle may be defined by:

$$M_{zf} = -\frac{T_f}{2R}T_{w,1} + \frac{T_f}{2R}T_{w,2} = \frac{T_f}{2R}\Delta T_{w,fa}$$

Yaw moment from a differential torque, $\Delta T_{w,ra,}$ rear axle may be defined by:

$$M_{zr} = -\frac{T_r}{2R}T_{w,3} + \frac{T_r}{2R}T_{w,4} = \frac{T_r}{2R}\Delta T_{w,ra}$$

Yaw moment from a steering angle may be defined by:

$$M_{z\delta} = 2C_{\alpha f}L_f\delta_f$$

Steering moment may be expressed with differential torque, $\Delta T_{w,ra,}$ may be defined by:

$$M_{steer} = \frac{r_s}{R}\Delta T_{w,fa}$$

The direct yaw moment generated from the steering moment may therefore be defined by:

$$M_{zf} = \frac{T_f}{2r_s}M_{steer}$$

In other words, a yaw moment, e.g., the first yaw moment of actions 301-303, on steerable wheels of embodiments herein e.g. the first set of steerable wheels 10, may be subject to yaw motion portions $M_{steer}$ and the direct yaw moment defined above. The yaw motion produced by $M_{steer}$ may be delayed in comparison to the direct yaw moment, e.g. as it takes an adjustment time period for the steering of $M_{steer}$ to affect the yaw motion.

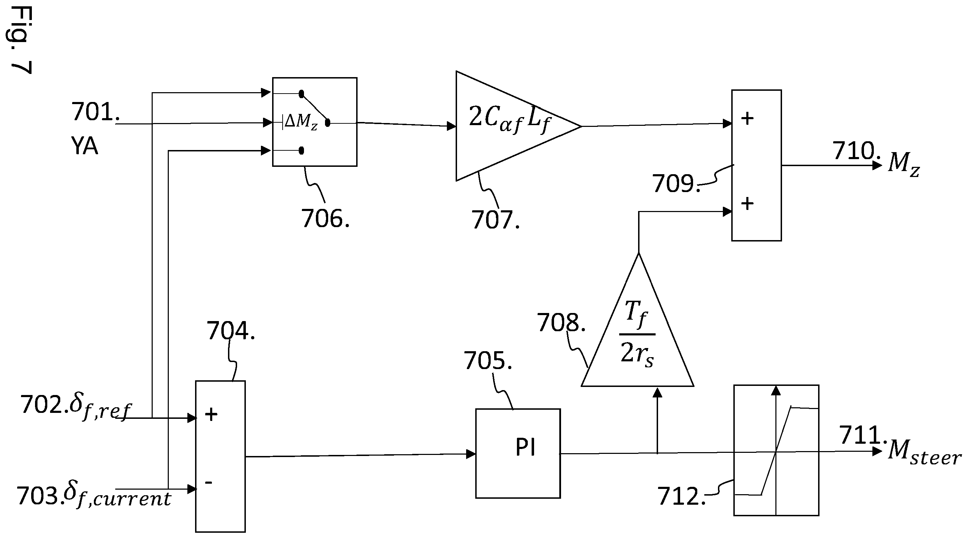

**Fig. 7** illustrates an example scenario of how a yaw moment and a steering moment may be generated in embodiments herein.

In the example scenario, a steering moment **$M_{steer}$ 711** may be signalled by a first **PI controller 705,** optionally sent through **a limiter module 712,** which steering moment signal is in turn produced by a first **module 704** as a function of a **reference steering angle 702,** e.g. as produced by the model of the reference vehicle discussed in above actions 301-303, and a **current steering angle 703** of the vehicle 1. The reference steering angle 702 and the current steering angle 703 may respectively be steering wheel angles and/or respective steering on the first set of steerable wheels 10. The reference steering angle 702 may be derived from a path follower, e.g. as part of a model of the reference vehicle. The current steering angle 703 may be a mean of a steering angle of the wheels in the first set of wheels 10. The current steering angle 703 and/or the reference steering angle 702 may in some embodiments be the indication of the desired yaw motion as in action 301.

In the example scenario, when additional yaw acceleration is requested, e.g. to be produced from the second set of wheels 20, a **Yaw Acceleration signal (YA) 701** is triggered, e.g. as part of action 303 above, and hence an extra yaw moment may be added through feedforward control in a **second module 706** and **a third module 707.**

The second and third module 706, 707 determines the yaw moment achieved from the reference steering angle 702, the current steering angle 703 and/or the requested YA.

The second module 706 may comprise a switch wherein when $M_{steer}$ is saturated then the reference steering angle 702 may be used to generate an increase feedforward action. When the YA signal is above a threshold and/or set high by any suitable controller, e.g. high-level controller, the YA may be used to determine a yaw moment signal to the third module 707. The third module 707 may determine/compute the resulting yaw moment.

In the example scenario, a yaw motion of the vehicle 1 is then determined by determining the yaw moment with respect to a scrub radius in a **fourth module 708.** A **fifth module 709** may then determine the yaw motion of the vehicle 1 as a function of the yaw moment determined by the third module 707 and the fourth module 708. The modules of the example scenario may be separate units and/or co-located units, e.g. in the same circuit.

Steering moment limitations

Max torque for a wheel, e.g. any one of the first set of wheels 10, may depend on any one or more of the following parameters:

- an estimated friction:
  $$\hat{\mu}$$
- estimated normal loads:
  $$\hat{F}_{wz,i},$$
- a parameter $\xi$, e.g. which is 0-1 depending on how much friction force that may be needed to be preserved for lateral forces.

A maximum torque that may be applied to a wheel may therefore be defined by, e.g., assuming steady state wheel dynamics,:

$$T_{w,i} = \hat{\mu}\hat{F}_{wz,i}R\,\xi$$

Motor maps may be used to get an electric machine limit of the motors, e.g. motor of the first set of motion support devices 11 and/or the at least one second motion support device 21, a lookup table may be used to get brake limits, e.g. brake of the first set of motion support devices 11 and/or the at least one second motion support device 21.

Upper limits may be defined by:

$$\overline{T}_{EM,i}$$

$$\overline{T}_{B,i}$$

Lower limits may be defined by:

$$\underline{T}_{EM,i}$$

$$\underline{T}_{B,i}$$

Combined actuator and friction limits for the electric machines may be expressed such that if the friction limitation is lower than the motor capabilities, e.g. of the first set of motion support devices 11 and/or the at least one second motion support device 21, then the motors may be limited accordingly.

Upper limits may be defined by:

$$\overline{T}_{EM,i} = \begin{cases} \hat{\mu}\hat{F}_{wz,i}R\,\xi\,, & if \;\; \overline{T}_{EM,i} \;\geq\; \hat{\mu}\hat{F}_{wz,i}R\,\xi \\ \overline{T}_{EM,i}\,, & else \end{cases}$$

Lower limits may be defined by:

$$\underline{T}_{EM,i} = \begin{cases} -\hat{\mu}\hat{F}_{wz,i}R\,\xi\,, & if\ \underline{T}_{EM,i} \le -\hat{\mu}\hat{F}_{wz,i}R\,\xi \\ \underline{T}_{EM,i}, & else \end{cases}$$

Limits for the brakes, e.g. of the first set of motion support devices 11 and/or the at least one second motion support device 21, may be set such that the if the motors may be used, they are prioritized, and the brakes may only intervene when the brake request is larger than what the motors may handle and there is enough friction. The lower limit may therefore be defined by:

$$\underline{T}_{B,i} = \begin{cases} 0, & if\ \underline{T}_{EM,i} \le -\hat{\mu}\hat{F}_{wz,i}R\,\xi \\ -\hat{\mu}\hat{F}_{wz,i}R\,\xi, & else\ if\ (\underline{T}_{EM,i} + \underline{T}_{B,i}) \le -\hat{\mu}\hat{F}_{wz,i}R\,\xi \\ \underline{T}_{B,i}, & else \end{cases}$$

The upper wheel limits may be defined by:

$$\overline{T}_{w,i} = G_i\overline{T}_{EM,i} + \overline{T}_{B,i}$$

The lower wheel limits may be defined by:

$$\underline{T}_{w,i} = \underline{G_i\,T}_{EM,i} + \underline{T}_{B,i}$$

Finally, the upper and lower steering limits may be defined by:

$$\overline{M}_{steer} = \frac{r_s}{R}(\overline{T}_{w,2} - \underline{T}_{w,1})$$

$$\underline{M}_{steer} = \frac{r_s}{R}(\underline{T}_{w,2} - \overline{T}_{w,1})$$

Yaw rate control

A single track model of the vehicle 1 may be expressed with equations of motion where the forces on the first set of steerable wheels 10 and the second set of wheels 20 have been lumped to a single wheel on respective axle:

$$mv_x(\dot{\beta} + \omega_z) = F_{y,f} + F_{y,r}$$

$$I_{zz}\dot{\omega}_z = L_f F_{y,f} - L_r F_{y,r}$$

The wheel/tire forces may be defined by:

$$F_{y,f} = -C_f(-\delta_f + \beta + \frac{L_f}{v_x}\omega_z)$$

$$F_{y,r} = -C_r(\beta - \frac{L_f}{v_x}\omega_z)$$

A state space equation may be defined by:

$$\begin{bmatrix} \dot{\beta} \\ \dot{\omega}_z \end{bmatrix} = \begin{bmatrix} \dfrac{-C_f-C_r}{mv_x} & \dfrac{-L_fC_f+L_rC_r}{mv_x^2} - 1 \\ \dfrac{-L_fC_f+L_rC_r}{I_{zz}} & \dfrac{-L_f^2C_f-L_r^2C_r}{I_{zz}v_x} \end{bmatrix}\begin{bmatrix} \beta \\ \omega \end{bmatrix} + \begin{bmatrix} \dfrac{C_f}{mv_x} \\ \dfrac{L_fC_f}{I_{zz}} \end{bmatrix}\delta_f$$

Using a steady state equation and that a curvature may be defined by $k = \omega_z/v_x$, a reference yaw rate based on an autonomous input or steer-by-wire input may be defined by:

$$\omega_z^{ref} = \frac{v_x}{L_f + L_r + mK_u v_x^2} \delta_f$$

Where an understeer gradient, $K_u$, is defined as:

$$K_u = \frac{C_r L_r - C_f L_f}{C_f C_r (L_f + L_r)}$$

A yaw rate may then be controlled as:

$$M_{DYM,k} = K_p \Delta \omega_{z,k} + K_i T_s \sum \Delta \omega_{z,k}$$

The steering moment may be expressed from the direct yaw moment as:

$$M_{steer,k} = \frac{2r_s}{T_f} M_{DYM,k}$$

$\mathbf{M_{steer}}$ may be limited in a number of different manners, e.g. as described in WO2022/042818 A1. As $\mathbf{M_{steer,k}}$ may be limited, a direct yaw moment may be distributed to the rear axle, e.g. as in action 303 above.

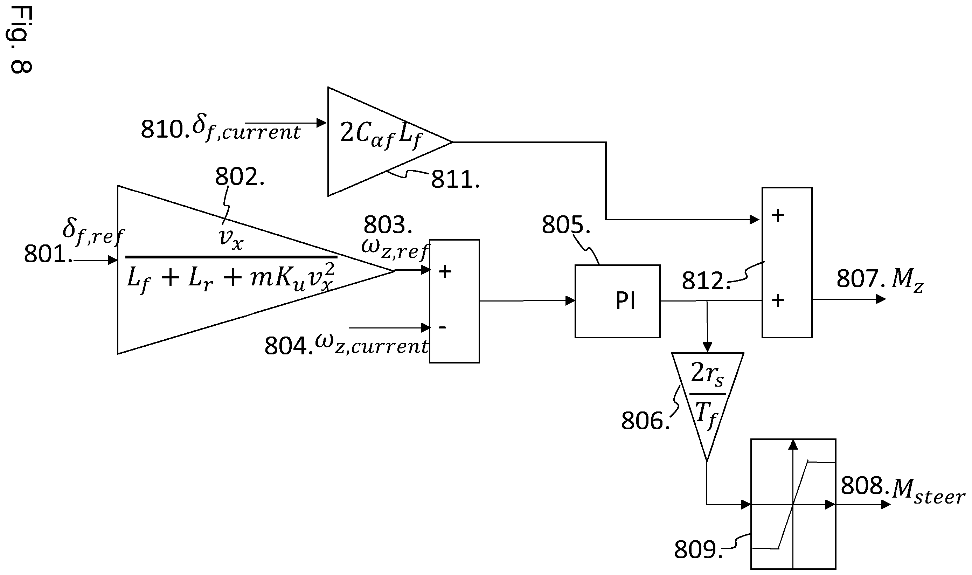

**Fig. 8** illustrates how two virtual forces $\mathbf{M_{steer}}$ and $\mathbf{M_z}$ may be generated in embodiments herein.

A **reference signal 801** may be an input to a **sixth module 802.** The reference signal 801 may be a reference steering angle, e.g. a steering wheel angle of the vehicle 1. The reference signal 801 may in some embodiments be the indication of the desired yaw motion as in action 301. A reference yaw rate is determined by the sixth module 802, e.g. with respect to speed of the vehicle 1, respective distances from a front and/or rear axle to a center of point of the vehicle 1, etc. A **seventh module 803** produces a yaw moment signal to be passed to a **second PI controller 805,** which yaw moment signal is produced by the seventh module 803 based on the reference yaw rate 803 and a **current yaw rate 804** of the vehicle 1. The second PI controller 805 may then produce a yaw motion signal which is sent to **an eight module 812.** Additionally a **current steering angle 810** of the vehicle 1, e.g., wherein the current steering angle 810 may be a steering wheel angles and/or respective steering on the first set of steerable wheels 10, may be configured to be feedforwarded through a **ninth module 811,** to the eight module 812. The eight module 812, based on the feed forward current steering angle 810 and the yaw motion signal of the PI controller 805 may produce a **yaw motion signal $M_z$ 807** to be produced by the vehicle 1. Based on the yaw motion signal of the PI controller 805, a **tenth module 806** may determine **a steering moment $M_{steer}$ 808,** e.g. which optionally is passed through **a limiter module 809.**

Control Allocation

The formulation of the control allocation problem may generally be defined by:

$$u^* = \arg\min_{\underline{u} \leq u \leq \overline{u}} [\|W_u(u - u_{des})\|_2^2] + \gamma[\|W_v(Bu - v)\|_2^2]$$

Rigid body dynamics may be used to derive how the virtual forces **v** enter the equations of motion through the control effectiveness matrix **B** and available actuators **u.** The equations of motions may be defined by:

$$m(\dot{v} + \omega \times v) = \sum F_i$$

$$I\dot{\omega} + \omega \times (I\omega) = \sum M_i$$

To simplify, e.g. to make computations feasible, only planar motion may be considered:

$$v = \begin{bmatrix} v_x & v_y & 0 \end{bmatrix}^T, \omega = \begin{bmatrix} 0 & 0 & \omega_z \end{bmatrix}^T$$

and the equations of motions may be defined by:

$$\begin{bmatrix} m\dot{v}_x \\ m\dot{v}_y \\ I\dot{\omega}_y \end{bmatrix} = \begin{bmatrix} v_y\omega_z \\ v_x\omega_z \\ 0 \end{bmatrix} + \begin{bmatrix} \sum F_{x,i} \\ \sum F_{y,i} \\ \sum r_i \times F_i \end{bmatrix}$$

The virtual forces may be defined as:

$$v = \begin{bmatrix} F_x \\ F_y \\ M_z \\ M_{steer} \end{bmatrix} = \begin{bmatrix} \sum F_{x,i} \\ \sum F_{y,i} \\ \sum r_i \times F_i \\ \dfrac{r_s}{R}\Delta T_{w,fa} \end{bmatrix}$$

Assuming steady state wheel dynamics and small angles a mapping v = Bu, may be defined by:

$$B = \begin{bmatrix} \dfrac{1}{R} & \dfrac{1}{R} & \dfrac{1}{R} & \dfrac{1}{R} & \dfrac{G_{crs}}{R} & \dfrac{G_{crs}}{R} & \dfrac{G_{str}}{R} & \dfrac{G_{str}}{R} & 0 \\ 0 & 0 & 0 & 0 & 0 & 0 & 0 & 0 & 2C_\alpha \\ \dfrac{-T}{2R} & \dfrac{T}{2R} & \dfrac{-T}{2R} & \dfrac{T}{2R} & \dfrac{-TG_{crs}}{2R} & \dfrac{TG_{crs}}{2R} & \dfrac{-TG_{str}}{2R} & \dfrac{TG_{str}}{2R} & 2L_fC_\alpha \\ \dfrac{-r_s}{R} & \dfrac{r_s}{R} & 0 & 0 & \dfrac{-G_{crs}r_s}{R} & \dfrac{G_{crs}r_s}{R} & 0 & 0 & 0 \end{bmatrix}$$

$$u = \begin{bmatrix} T_{B,1} \\ T_{B,2} \\ T_{B,3} \\ T_{B,4} \\ T_{EM,1} \\ T_{EM,2} \\ T_{EM,3} \\ T_{EM,4} \\ \delta_f \end{bmatrix}$$

The procedure of the control allocation may comprise locking allocation of the steering angle, e.g., such that:

$$\delta_{f,current} \leq \delta_f \leq \delta_{f,current}$$

It may further be possible to generate $M_{steer}$ and $M_z$ as previously shown, and to set a YA signal if added yaw acceleration is desired. Set the weight for the virtual forces as:

$$W_{M_{steer}} > W_{F_x} > W_{M_z} > W_{F_y}$$

In some embodiments, since steering allocation is locked and due to the chosen weighting, added feedforward action may be generated from the at least one second motion support device 21, e.g. the rear motors. This achieves a faster response as the dynamics of electric machines are much faster than the steering dynamics. If the faster response is undesired, feedforward the current steering angle. This will lead to pure tracking of the steering angle using the front electric machines.

In some embodiments, If $M_{steer}$ is saturated, the extra yaw moment may be added to the at least one second

14

motion support device 21, e.g. the rear motors. This is since steering allocation is locked and due to the chosen weighting. The steering angle may be indirectly controlled through a yaw rate controller.

Furthermore, some embodiments comprises generating **F**x using a PI controller for desired velocity and generate:

$$F_y = 2C_{\alpha f}\,\delta_{f,current}\ .$$

Lateral forces **F**y may be generated optionally, e.g. only for completeness of the computations. This is since they may be small and/or otherwise negligible. A steering actuator may still be present on the vehicle 1, e.g., as part of the first set of motion support devices 11 and/or the at least one second motion support device 21, thereby some allocation of lateral forces **F**y may be needed to be allocated, e.g., to make switching to manual/regular steering smoother and more efficient. In some of these embodiments, it may be assumed that there is no side slip, e.g., only the first set of steerable wheels 10 may produce lateral forces.

In some embodiments herein, it may be possible to allow an allocation of the steering wheel, meaning $\delta_f$ is not locked to the current steering angle in the control allocation of embodiments herein. This would allow for a blend of steer by propulsion and regular power steering.

In some embodiments herein, it may be possible to use a Linear Quadratic Regulator (LQR) controller with a reference gain and/or using integral states. In some of these embodiments, the model may include both $M_{steer}$ and the rear axle direct yaw moment, e.g. the second yaw moment of action 303 above.

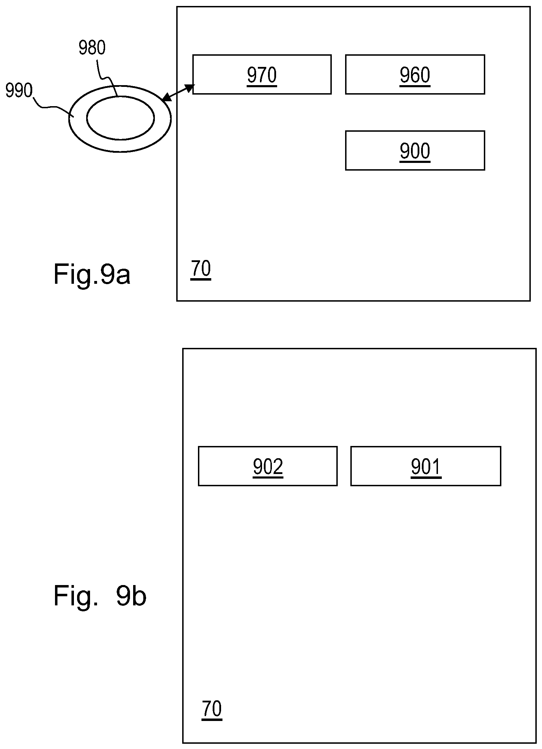

To perform the method actions described herein, the control unit 70 may be configured to control a yaw motion of the vehicle 1. The control unit 70 may further be configured to perform any one or more of the above actions 301-303 or any of the other examples and/or embodiments herein. The control unit 70 may be comprised in any suitable location such as e.g. the vehicle 1. The control unit 70 may for example comprise an arrangement depicted in **Figs. 9a** and **9b.**

The control unit 70 may comprise an **input and output interface 900** configured to communicate with any necessary components and/or entities of embodiments herein. The input and output interface 900 may comprise a wireless and/or wired receiver (not shown) and a wireless and/or wired transmitter (not shown). The control unit 70 may be arranged in any suitable location of the vehicle 1. The control unit 70 may use the input and output interface 900 to control and communicate with sensors actuators, e.g. the first set of motion support devices 11 and/or the at least one second motion support device 21, subsystems, and interfaces in the vehicle 1 by using any one or more out of: Controller Area Network (CAN), ethernet cables, Wi-Fi, Bluetooth, and/or other network interfaces.

The control unit 70 may be configured to, e.g. by means of an **obtaining unit 901** in the control unit 70, obtain an indication of a desired yaw motion to be applied by the vehicle 1.

The control unit 70 may be configured to, e.g. by means of a **determining unit 902** in the control unit 70, determine whether or not the desired yaw motion is obtainable by the first set of steerable wheels 10 by selecting a steering configuration for the said first set of steerable wheels, thereby producing a first yaw motion portion, and by operating said first set of motion support devices 11 associated with said first set of steerable wheels 10 so as to impart a first yaw moment on the vehicle 1, and thereby producing a second yaw motion portion, without exceeding one or more predetermined limits for the steering configuration and/or the first set of motion support devices 11 associated with said first set of steerable wheels 10.

The control unit 70 may be configured to, e.g. by means of the determining unit 902 in the control unit 70, in response to determining that the desired yaw motion cannot be obtained by the first set of steerable wheels 10 without exceeding the one or more predetermined limits for the steering configuration and/or the first set of motion support devices 11 associated with said first set of steerable wheels 10, operate the at least one second motion support device 21 associated with said second set of wheels 21 so as to impart a second yaw moment on the vehicle 1.

The embodiments herein may be implemented through a processor or one or more processors, such as the **processor 960** of a processing circuitry in the control unit 70 depicted in Fig. 9a, together with computer program code for performing the functions and actions of the embodiments herein. The program code mentioned above may also be provided as a computer program medium, for instance in the form of a data computer readable medium carrying computer program code for performing the embodiments herein when being loaded into the control unit 70. One such computer readable medium may be in the form of a memory stick. The computer program code may furthermore be provided as pure program code on a server and downloaded to the control unit 70.

The control unit 70 may further comprise a **memory 970** comprising one or more memory units. The memory 970 comprises instructions executable by the processor in control unit 70. The memory 970 is arranged to be used to store e.g. information, indications, data, configurations, sensor data, positioning information, yaw control information, and applications to perform the methods herein when being executed in the control unit 70.

In some embodiments, a **computer program 980** comprises instructions, which when executed by a computer, e.g. the at least one processor 960, cause the at least one processor of the control unit 70 to perform the actions 301-303 above.

In some embodiments, a **computer-readable storage medium 990** comprises the respective computer program 980. The computer-readable storage medium 990 may comprise program code for performing the steps of any one of actions 301-303 above when said program product is run on a computer, e.g. the at least one processor 960.

Those skilled in the art will appreciate that the units in the control unit 70 described above may refer to a combination of analogue and digital circuits, and/or one or more processors configured with software and/or firmware, e.g. stored in the control unit 70, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

It is to be understood that the present invention is not limited to the embodiments described above and illustrated in the drawings; rather, the skilled person will recognize that many changes and modifications may be made within the scope of the appended claims. Furthermore, all above embodiments may be combined in any suitable manner.

**Claims**

1. A method for controlling a yaw motion of a vehicle (1), the vehicle (1) comprising a first set of steerable wheels (10) and a second set of wheels (20), the vehicle (1) comprising a first set of motion support devices (11) for controlling a movement of said first set of steerable wheels (10), and at least one second motion support device (21) for controlling a movement of said second set of wheels (20), whereby each motion support device in said first set of motion support devices (11) is drivingly connected, directly or indirectly, to a respective individual wheel of the first set of steerable wheels (10), such that each motion support device out of the first set of motion support devices (11) can produce a load via the respective individual wheel by propelling and/or braking the respective individual wheel, the method comprising:

   - obtaining (301) an indication of a desired yaw motion to be applied by the vehicle (1),
   - determining (302) whether or not the desired yaw motion is obtainable by the first set of steerable wheels (10) by selecting a steering configuration for the said first set of steerable wheels, thereby producing a first yaw motion portion, and by operating said first set of motion support devices (11) associated with said first set of steerable wheels (10) so as to impart a first yaw moment on the vehicle (1), and thereby producing a second yaw motion portion, without exceeding one or more predetermined limits for the steering configuration and/or the first set of motion support devices (11) associated with said first set of steerable wheels (10), and wherein the second yaw motion portion is based on a torque applied to each respective wheel of the first set of steerable wheels (10), and/or based on a wheel suspension scrub radius of each respective wheel of the first set of steerable wheels (10);
   **characterized by**
   - in response to determining (302) that the desired yaw motion cannot be obtained by the first set of steerable wheels (10) without exceeding the one or more predetermined limits for the steering configuration and/or the first set of motion support devices (11) associated with said first set of steerable wheels (10), operating (303) the at least one second motion support device (21) associated with said second set of wheels (21) so as to impart a second yaw moment on the vehicle (1), wherein the second yaw moment is at least partly a resulting yaw moment produced by operating the at least one second motion support device (21) to propel the vehicle (1), to achieve a yaw moment based on respective individual steering angles for the first set of steerable wheels (10).

2. The method according to claim 1, wherein operating said first set of motion support devices (11), associated with said first set of steerable wheels (10) so as to impart the first yaw moment on the vehicle (1), comprises each motion support device out of the first set of motion support devices (11) producing individual loads for its respective individual wheel out of the first set of steerable wheels (10).

3. The method according to claim 2, wherein producing individual loads for respective individual wheels out of the first set of steerable wheels (10) comprises applying respective loads in different directions for two different respective wheels in the first set of steerable wheels (11).

4. The method according to any one of claims 2-3, wherein producing individual loads of respective individual wheels out of the first set of steerable wheels (10) comprises braking and/or propelling at least one wheel in the first set of steerable wheels (11).

5. The method according to any one of the preceding claims, wherein the one or more predetermined limits for the first set of motion support devices (11) comprises, for each motion support device in the first set of motion support devices (11), a maximum individual load based on a frictional force for its respective individual wheel out of the first set of steerable wheels (10).

6. The method according to any one of the preceding claims wherein obtaining (301) the indication of the desired yaw motion of the vehicle (1), comprises obtaining a steering angle of the vehicle (1), and preferably wherein the method further comprises comparing the steering angle with a model of a reference vehicle, and determining the desired yaw motion to be a yaw motion applied by the reference vehicle in the model when the reference vehicle in the model is steered with the obtained steering angle.

7. The method according to any one of the preceding claims, wherein the at least one second motion support device (21) comprises for each of the second set of wheels (20) a respective second motion support device for individual control of the movement of each respective wheel in the second set of wheels (20).

8. The method according to any one of the preceding claims wherein the second yaw moment is at least partly a resulting yaw moment produced by operating (303) the at least one second motion support device (21) with respective individual steering angles for the first set of steerable wheels (10).

9. A control unit (70) configured to perform the method according to any one of claims 1-8.

10. A vehicle (1) comprising the control unit (70) according to claim 9, the vehicle further comprising a first set of steerable wheels (10) and a second set of wheels (20), the vehicle (1) comprising a first set of motion support devices (11) for controlling a movement of said first set of steerable wheels (10), and at least one second motion support device (21) for controlling a movement of said second set of wheels (20), whereby each motion support device in said first set of motion support devices (11) is drivingly connected, directly or indirectly, to a respective individual wheel of the first set of steerable wheels (10), such that each motion support device out of the first set of motion support devices (11) can produce a load via the 10 respective individual wheel by propelling and/or braking the respective individual wheel.

11. The vehicle (1) according to claim 11, wherein each respective wheel of the first set of steerable wheels (10) is mounted to a respective kingpin bolt such that an axis along an angle of the respective kingpin bolt is a scrub radius from intersecting a center line of a respective wheel, and wherein a yaw motion produced when turning at least one wheel out of the first set of steerable wheels (10) is based on the scrub radius.

12. The vehicle (1) according to any one of the preceding claims, wherein the first set of motion support devices (11) comprises a respective electric motor for each respective wheel of the first set of steerable wheels (10), and preferably wherein the first set of motion support devices (11) further comprises a respective brake for each respective wheel of the first set of steerable wheels (10).

13. A computer program (980) comprising program code means for performing the steps of any one of claims 1-8 when said program is run on a computer.

14. A computer program medium (990) carrying a computer program comprising program code means for performing the steps of any one of claims 1-8 when said program is run on a computer.

**Patentansprüche**

1. Verfahren zum Steuern einer Gierbewegung eines Fahrzeugs (1), das Fahrzeug (1) umfassend einen ersten Satz von lenkbaren Rädern (10) und einen zweiten Satz von Rädern (20), das Fahrzeug (1) umfassend einen ersten Satz von Bewegungsunterstützungsvorrichtungen (11) zum Steuern einer Verlagerung des ersten Satzes von lenkbaren Rädern (10) und mindestens eine zweite Bewegungsunterstützungsvorrichtung (21) zum Steuern einer Verlagerung des zweiten Satzes von Rädern (20), wobei jede Bewegungsunterstützungsvorrichtung in dem ersten Satz von Bewegungsunterstützungsvorrichtungen (11), direkt oder indirekt, mit einem jeweiligen einzelnen Rad des ersten Satzes von lenkbaren Rädern (10) antriebsverbunden ist, sodass jede Bewegungsunterstützungsvorrichtung aus dem ersten Satz von Bewegungsunterstützungsvorrichtungen (11) eine Last über das jeweilige einzelne Rad durch Vorwärtstreiben und/oder Abbremsen des jeweiligen einzelnen Rads erzeugen kann, das Verfahren umfassend:

- Erlangen (301) einer Angabe einer gewünschten Gierbewegung, die durch das Fahrzeug (1) anzuwenden ist,

- Bestimmen (302), ob die gewünschte Gierbewegung durch den ersten Satz von lenkbaren Rädern (10) erlangbar ist oder nicht, durch Auswählen einer Lenkkonfiguration für den ersten Satz von lenkbaren Rädern, wobei dadurch ein erster Gierbewegungsanteil erzeugt wird, und durch Betreiben des ersten Satzes von Bewegungsunterstützungsvorrichtungen (11), die dem ersten Satz von lenkbaren Rädern (10) zugeordnet sind, um ein erstes Giermoment auf das Fahrzeug (1) zu übertragen und dadurch einen zweiten Gierbewegungsanteil zu erzeugen, ohne eine oder mehrere zuvor bestimmte Grenzen für die Lenkkonfiguration und/oder den ersten Satz von Bewegungsunterstützungsvorrichtungen (11), die dem ersten Satz von lenkbaren Rädern (10) zugeordnet sind, zu überschreiten, und wobei der zweite Gierbewegungsanteil auf einem Drehmoment, das auf jedes jeweilige Rad des ersten Satzes von lenkbaren Rädern (10) angewendet wird, basiert und/oder auf einem Radaufhängungslenkrollradius jedes jeweiligen Rads des ersten Satzes von lenkbaren Rädern (10) basiert; **gekennzeichnet durch**

- als Reaktion auf das Bestimmen (302), dass die gewünschte Gierbewegung nicht durch den ersten Satz von lenkbaren Rädern (10) erlangt werden kann, ohne die eine oder die mehreren zuvor bestimmten Grenzen für die Lenkkonfiguration und/oder den ersten Satz von Bewegungsunterstützungsvorrichtungen (11), die mit dem ersten Satz von lenkbaren Rädern (10) zugeordnet sind, zu überschreiten, Betreiben (303) der mindestens einen zweiten Bewegungsunterstützungsvorrichtung (21), die dem zweiten Satz von Rädern (21) zugeordnet ist, um ein zweites Giermoment auf das Fahrzeug (1) zu übertragen, wobei das zweite Giermoment mindestens teilweise ein resultierendes Giermoment ist, das durch Betreiben der mindestens einen zweiten Bewegungsunterstützungsvorrichtung (21) erzeugt wird, um das Fahrzeug (1) vorwärtszutreiben, um ein Giermoment basierend auf jeweiligen individuellen Lenkwinkeln für den ersten Satz von lenkbaren Rädern (10) zu erreichen.

2. Verfahren nach Anspruch 1, wobei das Betreiben des ersten Satzes von Bewegungsunterstützungsvorrichtungen (11), die dem ersten Satz von lenkbaren Rädern (10) zugeordnet sind, um das erste Giermoment auf das Fahrzeug (1) zu übertragen, umfasst, dass jede Bewegungsunterstützungsvorrichtung aus dem ersten Satz von Bewegungsunterstützungsvorrichtungen (11) individuelle Lasten für ihr jeweiliges individuelles Rad aus dem ersten Satz von lenkbaren Rädern (10) erzeugt.

3. Verfahren nach Anspruch 2, wobei ein Erzeugen individueller Lasten für jeweilige einzelne Räder aus dem ersten Satz von lenkbaren Rädern (10) ein Anwenden jeweiliger Lasten in verschiedenen Richtungen für zwei verschiedene jeweilige Räder in dem ersten Satz von lenkbaren Rädern (11) umfasst.

4. Verfahren nach einem der Ansprüche 2 bis 3, wobei das Erzeugen individueller Lasten jeweiliger einzelner Räder aus dem ersten Satz von lenkbaren Rädern (10) das Abbremsen und/oder Vorwärtstreiben mindestens eines Rads in dem ersten Satz von lenkbaren Rädern (11) umfasst.

5. Verfahren nach einem der vorstehenden Ansprüche, wobei die eine oder die mehreren zuvor bestimmten Grenzen für den ersten Satz von Bewegungsunterstützungsvorrichtungen (11), für jede Bewegungsunterstützungsvorrichtung in dem ersten Satz von Bewegungsunterstützungsvorrichtungen (11), eine maximale individuelle Last umfasst, die auf einer Reibungskraft für ihr jeweiliges individuelles Rad aus dem ersten Satz von lenkbaren Rädern (10) basiert.

6. Verfahren nach einem der vorstehenden Ansprüche, wobei das Erlangen (301) der Angabe der gewünschten Gierbewegung des Fahrzeugs (1) das Erlangen eines Lenkwinkels des Fahrzeugs (1) umfasst und wobei das Verfahren vorzugsweise ferner ein Vergleichen des Lenkwinkels mit einem Modell eines Referenzfahrzeugs und das Bestimmen der gewünschten Gierbewegung als eine Gierbewegung umfasst, die durch das Referenzfahrzeug in dem Modell angewendet wird, wenn das Referenzfahrzeug in dem Modell mit dem erlangten Lenkwinkel gelenkt wird.

7. Verfahren nach einem der vorstehenden Ansprüche, wobei die mindestens eine zweite Bewegungsunterstützungsvorrichtung (21) für jedes des zweiten Satzes von Rädern (20) eine jeweilige zweite Bewegungsunterstützungsvorrichtung für eine individuellen Steuerung der Verlagerung jedes jeweiligen Rads in dem zweiten Radsatz (20) umfasst.

8. Verfahren nach einem der vorstehenden Ansprüche, wobei das zweite Giermoment mindestens teilweise ein resultierendes Giermoment ist, das durch Betreiben (303) der mindestens einen zweiten Bewegungsunterstützungsvorrichtung (21) mit jeweiligen individuellen Lenkwinkeln für den ersten Satz von lenkbaren Rädern (10) erzeugt wird.

9. Steuereinheit (70), die konfiguriert ist, um das Verfahren nach einem der Ansprüche 1 bis 8 durchzuführen.

10. Fahrzeug (1), umfassend die Steuereinheit (70) nach Anspruch 9, das Fahrzeug ferner umfassend einen ersten Satz von lenkbaren Rädern (10) und einen zweiten Satz von Rädern (20), das Fahrzeug (1) umfassend einen ersten Satz von Bewegungsunterstützungsvorrichtungen (11) zum Steuern einer Verlagerung des ersten Satzes von lenkbaren Rädern (10) und mindestens eine zweite Bewegungsunterstützungsvorrichtung (21) zum Steuern einer Verlagerung des zweiten Satzes von Rädern (20), wobei jede Bewegungsunterstützungsvorrichtung in dem ersten Satz von Bewegungsunterstützungsvorrichtungen (11), direkt oder indirekt, mit einem jeweiligen einzelnen Rad des ersten Satzes von lenkbaren Rädern (10) antriebsverbunden ist, sodass jede Bewegungsunterstützungsvorrichtung aus dem ersten Satz von Bewegungsunterstützungsvorrichtungen (11) eine Last über das 10 jeweilige einzelne Rad durch Vorwärtstreiben und/oder Abbremsen des jeweiligen einzelnen Rads erzeugen kann.

11. Fahrzeug (1) nach Anspruch 11, wobei jedes jeweilige Rad des ersten Satzes von lenkbaren Rädern (10) an einem jeweiligen Achsschenkelbolzen montiert ist, sodass eine Achse entlang eines Winkels des jeweiligen Achsschenkelbolzens ein Lenkrollradius von einem Schneiden einer Mittellinie eines jeweiligen Rads ist, und wobei eine Gierbewegung, die bei dem Drehen mindestens eines Rads aus dem ersten Satz von lenkbaren Rädern (10) erzeugt wird, auf dem Lenkrollradius basiert.

12. Fahrzeug (1) nach einem der vorstehenden Ansprüche, wobei der erste Satz von Bewegungsunterstützungsvorrichtungen (11) einen jeweiligen Elektromotor für jedes jeweilige Rad des ersten Satzes von lenkbaren Rädern (10) umfasst und wobei der erste Satz von Bewegungsunterstützungsvorrichtungen (11) vorzugsweise ferner eine jeweilige Bremse für jedes jeweilige Rad des ersten Satzes von lenkbaren Rädern (10) umfasst.

13. Computerprogramm (980), umfassend Programmcodemittel zum Durchführen der Schritte nach einem der Ansprüche 1 bis 8, wenn das Programm auf einem Computer ausgeführt wird.

14. Computerprogrammmedium (990), das ein Computerprogramm trägt, umfassend Programmcodemittel zum Durchführen der Schritte nach einem der Ansprüche 1 bis 8, wenn das Programm auf einem Computer ausgeführt wird.

**Revendications**

1. Procédé de commande d'un mouvement de lacet d'un véhicule (1), le véhicule (1) comprenant un premier ensemble de roues orientables (10) et un second ensemble de roues (20), le véhicule (1) comprenant un premier ensemble de dispositifs d'assistance au mouvement (11) destinés à commander un mouvement dudit premier ensemble de roues orientables (10), et au moins un second dispositif d'assistance au mouvement (21) destiné à commander un mouvement dudit second ensemble de roues (20), selon lequel chaque dispositif d'assistance au mouvement dans ledit premier ensemble de dispositifs d'assistance au mouvement (11) est relié par entraînement, directement ou indirectement, à une roue individuelle respective du premier ensemble de roues orientables (10), de sorte que chaque dispositif d'assistance au mouvement parmi le premier ensemble de dispositifs d'assistance au mouvement (11) puisse produire une charge par l'intermédiaire de la roue individuelle respective en propulsant et/ou en freinant la roue individuelle respective, le procédé comprenant :

- l'obtention (301) d'une indication d'un mouvement de lacet souhaité à appliquer par le véhicule (1),
- la détermination (302) du fait que le mouvement de lacet souhaité peut ou non être obtenu par le premier ensemble de roues orientables (10) en sélectionnant une configuration de braquage pour ledit premier ensemble de roues orientables, produisant ainsi une première partie de mouvement de lacet, et en faisant fonctionner ledit premier ensemble de dispositifs d'assistance au mouvement (11) associés audit premier ensemble de roues orientables (10) afin d'apporter un premier moment de lacet sur le véhicule (1), et produisant ainsi une seconde partie de mouvement de lacet, sans dépasser une ou plusieurs limites prédéterminées pour la configuration de braquage et/ou le premier ensemble de dispositifs d'assistance au mouvement (11) associés audit premier ensemble de roues orientables (10), et dans lequel la seconde partie de mouvement de lacet est sur la base d'un couple appliqué à chaque roue respective du premier ensemble de roues orientables (10), et/ou sur la base d'un rayon de frottement de suspension de roue de chaque roue respective du premier ensemble de roues orientables (10) ; **caractérisé par**
- en réponse à la détermination (302) du fait que le mouvement de lacet souhaité ne peut pas être obtenu par le premier ensemble de roues orientables (10) sans dépasser la ou les limites prédéterminées pour la configuration de braquage et/ou le premier ensemble de dispositifs d'assistance au mouvement (11) associés audit premier ensemble de roues orientables (10), le fonctionnement (303) de l'au moins un second dispositif d'assistance au mouvement (21) associé audit second ensemble de roues (21) afin d'apporter un second moment de lacet sur le véhicule (1), dans lequel le second moment de lacet est au moins en partie un moment de lacet résultant produit par fonctionnement de l'au moins un second dispositif d'assistance au mouvement (21) pour propulser le véhicule (1), afin d'atteindre un moment de lacet sur la base d'angles de braquage individuels respectifs pour le premier ensemble de roues orientables (10).

2. Procédé selon la revendication 1, dans lequel le fonctionnement dudit premier ensemble de dispositifs d'assistance au mouvement (11) associés audit premier ensemble de roues orientables (10) afin d'apporter le premier moment de lacet sur le véhicule (1), comprend la production de charges individuelles, par chaque dispositif d'assistance au mouvement parmi le premier ensemble de dispositifs d'assistance au mouvement (11), pour sa roue individuelle respective parmi le premier ensemble de roues orientables (10).

3. Procédé selon la revendication 2, dans lequel la production de charges individuelles pour des roues individuelles respectives parmi le premier ensemble de roues orientables (10) comprend l'application de charges respectives dans des directions différentes pour deux roues respectives différentes dans le premier ensemble de roues orientables (11).

4. Procédé selon l'une quelconque des revendications 2 à 3, dans lequel la production de charges individuelles de roues individuelles respectives parmi le premier ensemble de roues orientables (10) comprend le freinage et/ou la propulsion d'au moins une roue dans le premier ensemble de roues orientables (11).

5. Procédé selon l'une quelconque des revendications précédentes, dans lequel la ou les limites prédéterminées pour le premier ensemble de dispositifs d'assistance au mouvement (11) comprennent, pour chaque dispositif d'assistance au mouvement dans le premier ensemble de dispositifs d'assistance au mouvement (11), une charge individuelle maximale sur la base d'une force de frottement pour sa roue individuelle respective parmi le premier ensemble de roues orientables (10).

6. Procédé selon l'une quelconque des revendications précédentes, dans lequel l'obtention (301) de l'indication du mouvement de lacet souhaité du véhicule (1) comprend l'obtention d'un angle de braquage du véhicule (1), et de préférence, dans lequel le procédé comprend en outre la comparaison de l'angle de braquage avec un modèle d'un véhicule de référence, et la détermination du mouvement de lacet souhaité comme étant un mouvement de lacet appliqué par le véhicule de référence dans le modèle lorsque le véhicule de référence dans le modèle est dirigé selon l'angle de braquage obtenu.

7. Procédé selon l'une quelconque des revendications précédentes, dans lequel l'au moins un second dispositif d'assistance au mouvement (21) comprend, pour chacun du second ensemble de roues (20), un second dispositif d'assistance au mouvement respectif pour une commande individuelle du mouvement de chaque roue respective dans le second ensemble de roues (20).

8. Procédé selon l'une quelconque des revendications précédentes, dans lequel le second moment de lacet est au moins en partie un moment de lacet résultant produit par fonctionnement (303) de l'au moins un second dispositif d'assistance au mouvement (21) selon des angles de braquage individuels respectifs pour le premier ensemble de roues orientables (10).

9. Unité de commande (70) conçue pour mettre en œuvre le procédé selon l'une quelconque des revendications 1 à 8.

10. Véhicule (1) comprenant l'unité de commande (70) selon la revendication 9, le véhicule comprenant en outre un premier ensemble de roues orientables (10) et un second ensemble de roues (20), le véhicule (1) comprenant un premier ensemble de dispositifs d'assistance au mouvement (11) destinés à commander un mouvement dudit premier ensemble de roues orientables (10), et au moins un second dispositif d'assistance au mouvement (21) destiné à commander un mouvement dudit second ensemble de roues (20), selon lequel chaque dispositif d'assistance au mouvement dans ledit premier ensemble de dispositifs d'assistance au mouvement (11) est relié par entraînement, directement ou indirectement, à une roue individuelle respective du premier ensemble de roues orientables (10), de sorte que chaque dispositif d'assistance au mouvement parmi le premier ensemble de dispositifs d'assistance au mouvement (11) puisse produire une charge par l'intermédiaire de la 10 roue individuelle respective en propulsant et/ou en freinant la roue individuelle respective.

11. Véhicule (1) selon la revendication 11, dans lequel chaque roue respective du premier ensemble de roues orientables (10) est montée sur un boulon de pivot de fusée respectif de sorte qu'un axe le long d'un angle du boulon de pivot de fusée respectif soit un rayon de frottement par rapport à l'intersection d'une ligne médiane d'une roue respective, et dans lequel un mouvement de lacet produit lors du braquage d'au moins une roue parmi le premier ensemble de roues orientables (10) est sur la base du rayon de frottement.

12. Véhicule (1) selon l'une quelconque des revendications précédentes, dans lequel le premier ensemble de dispositifs d'assistance au mouvement (11) comprend un moteur électrique respectif pour chaque roue respective du premier ensemble de roues orientables (10), et de préférence, dans lequel le premier ensemble de dispositifs d'assistance au mouvement (11) comprend en outre un frein respectif pour chaque roue respective du premier ensemble de roues orientables (10).

13. Programme d'ordinateur (980) comprenant un moyen de code de programme pour la mise en œuvre des étapes selon l'une quelconque des revendications 1 à 8 lorsque ledit programme est exécuté sur un ordinateur.

14. Support de programme informatique (990) contenant un programme informatique comprenant un moyen de code de programme pour la mise en œuvre des étapes selon l'une quelconque des revendications 1 à 8 lorsque ledit programme est exécuté sur un ordinateur.

1

70

11

21

20

10

Fig. 1

Fig. 2

Fig. 3

Fig. 4

Fig. 5

Fig. 6

Fig. 7

Fig. 8

980

990

| 970 | | 960 |
|-----|--|-----|

| 900 |
|-----|

**Fig.9a**

70

| 902 | | 901 |
|-----|--|-----|

**Fig. 9b**

70

**REFERENCES CITED IN THE DESCRIPTION**

**Patent documents cited in the description**

- WO 2022042818 A1
- EP 3444157 A1